# EUROPÄISCHE PATENTSCHRIFT

(11) **EP 2 430 743 B1**
(45) Veröffentlichungstag und Bekanntmachung des Hinweises auf die Patenterteilung: **30.10.2019**
(21) Anmeldenummer: 10719942.4
(22) Anmeldetag: 12.05.2010
(51) Int. Cl.: H02P 6/00, H02P 6/18, H02P 8/08

(54) **VERFAHREN ZUR BLOCKIERERKENNUNG VON ELEKTRISCH KOMMUTIERTEN ELEKTROMOTOREN**
METHOD FOR DETECTING STALL CONDITIONS OF ELECTRICALLY COMMUTATED ELECTRIC MOTORS
PROCÉDÉ D'IDENTIFICATION DU BLOCAGE DE MOTEURS ÉLECTRIQUES À COMMUTATION ÉLECTRIQUE

(30) Priorität: 13.05.2009 DE 102009021205
(43) Veröffentlichungstag der Anmeldung: 21.03.2012
(60) Teilanmeldung: 18186283.0
(73) Patentinhaber: Elmos Semiconductor Aktiengesellschaft, 44227 Dortmund (DE)
(72) Erfinder: HARTZSCH, Jörg, 44227 Dortmund (DE)
(74) Vertreter: dompatent von Kreisler Selting Werner - Partnerschaft von Patent- und Rechtsanwälten mbB
(86) Internationale Anmeldenummer: PCT/EP2010/056586
(87) Internationale Veröffentlichungsnummer: WO 2010/130802

(56) Entgegenhaltungen:
- EP-A1- 1 460 757
- EP-A1- 1 760 875
- DE-A1- 4 035 970
- JP-A- 2000 166 297
- US-B1- 6 285 156

## Beschreibung

Die Erfindung betrifft ein Verfahren zur Blockiererkennung für elektrisch kommutierte Elektromotoren verschiedenster Typen und Wicklungsanzahl und insbesondere von Schrittmotoren unipolaren und bipolaren Typs sowie von 3-phasigen Schrittmotoren.

Zur Positionsbestimmung von mit Schrittmotoren angetriebenen Systemen sind nach dem Stand der Technik verschiedene Möglichkeiten bekannt. Man kann beispielsweise die Position des angetriebenen Bauteils mittels Absolutwert-Positionssensoren unmittelbar erfassen. Diese Version scheidet jedoch in den meisten Fällen wegen des hohen Material- und Kostenaufwandes aufgrund des Sensors aus.

Die grundsätzlichen Ausführungsformen und Betriebsarten von Schrittmotoren werden beispielsweise in S. Held: "Schrittantriebe", in: Industrie, Elektrik und Elektronik, 39. Jg, 1986, Nr. 6, Seiten 58-60, erläutert. Demnach unterscheidet man Unipolar- und Bipolarmotoren. Ferner existieren 3-phasige Schrittmotoren. Beim Unipolarmotor besteht jede Phase des Schrittmotors aus zwei getrennten Wicklungen mit Mittelanzapfung, wobei zum Betrieb jeweils nur eine Teilwicklung erregt wird. Beim Bipolarmotor haben die Phasenwicklungen keine Mittelanzapfungen, sondern werden abwechselnd in beiden Richtungen vom Betriebsstrom durchflossen. Je nachdem, ob zugleich nur eine einzige oder zwei Erregerspulen bestromt werden, spricht man von Ein- oder Zwei-Strang-Bestromung. Bei diesen Bestromungsarten unterscheidet man zwischen Vollschnitt- und Halbschnitt-Ansteuerung mit oder ohne PMW-Modulation mit Microstepping und Sinus-/Trapez- oder dergleichen Nachbildung.

Durch die Eigenschaft von Schrittmotoren, jeweils diskrete Schritte, d. h. Winkelinkremente, auszuführen, kann die Positionsbestimmung einfach dadurch erfolgen, dass von einem räumlich definierten Startpunkt mittels eines elektronischen Zählers die Anzahl der ausgeführten Schritte überwacht, d. h. gezählt wird. Für eine derartige Positionserkennung müssen im wesentlichen die folgenden Voraussetzungen realisiert werden: Zum einen muss der tatsächliche Startpunkt, in der Regel ein Endanschlag, als Ausgangspunkt der Bewegung erkannt werden und zum anderen muss laufend überwacht werden, ob bei jeder Schritt-Motorwicklungsbestromung tatsächlich ein Schritt ausgeführt worden ist.

Diese beiden Voraussetzungen lassen sich mit externen Sensoren, beispielsweise Endschaltern und Kodierscheiben, kontrollieren, was allerdings aufwendig und kostenintensiv ist. Alternativ sind sensorlose Verfahren zur Schritterkennung bekannt, bei dem der Speisestrom oder die Speisespannung während der Bestromung der Motorwicklungen analysiert wird. Dabei ist es neben einer Schritterkennung auch möglich, eine Blockierung des Ankers des Schrittmotors und damit das Verfahren eines mit dem Anker in Wirkverbindung stehenden Stellglieds gegen einen (Referenz-)Endanschlag (siehe oben) zu erkennen.

Ein Verfahren und eine Vorrichtung zur sensorlosen Bewegungserkennung eines mehrphasigen Schrittmotors ist beispielsweise aus der DE-A-40 35 970 bekannt. Darin werden die Spannungen zweier Phasen, d. h. die an den Motorwicklungen anliegenden Spannungen, mittels eines Mikrocomputers ausgewertet. Im Einzelnen treten im Blockierfall Spannungseinbrüche bei den Phasenspannungen auf, die registriert werden. Das Verfahren soll zwar gegen Hochfrequenzstörungen unempfindlich sein, weist jedoch eine Reihe anderer Nachteile auf: Die Bewegungserkennung ist nämlich nur an mehrphasigen, unipolaren Schrittmotoren und nicht an bipolaren Schrittmotoren möglich. Außerdem sind die Spannungseinbrüche nur dann messbar, wenn die Stromquelle relativ hochohmig ist; in der Regel müssen also Shunt-Widerstände eingesetzt werden. Dies bedingt natürlich einen erheblichen Bauteileaufwand und zudem eine ungünstige Energiebilanz aufgrund der am Widerstand umgesetzten Verlustwärme.

In der EP-A-0 462 050 ist ebenfalls ein Verfahren und eine Schaltung zum Erfassen des Außertrittfallens eines Schrittmotors beschrieben. Der jeweils durch die Motorwicklungen fließende Strom wird an einem Shunt-Widerstand abgegriffen und ausgewertet. Dabei hat man ebenfalls wie in der vorgenannten Druckschrift die Probleme durch die Verwendung des Shunt-Widerstands. Eine weitere Schwierigkeit ist, dass Strommessungen unter bestimmten Betriebsbedingungen, beispielsweise bei Spannungsschwankungen, wie sie häufig in Bordnetzen von Kraftfahrzeugen auftreten, relativ fehleranfällig sind, was nur durch aufwändige Entstör- und Stabilisierungsmaßnahmen ausgeglichen werden kann.

In der EP-A-0 402 220 und der EP-A-0 574 339 sind weitere Verfahren zur Schritterkennung bei Schrittmotoren erläutert, welche allerdings ebenfalls die vorgenannten Unzulänglichkeiten aufweisen.

Aus der DE-C-38 36 240 ist es bekannt, zur Abschätzung des Rotorpositionswinkels jeweils nicht erregten Wicklungen einen Abtastimpuls zuzuführen, der eine Stromänderung in den nicht erregten Phasen verursacht. Durch Auswertung der Zeit des Stromanstieges oder -abfalles werden Induktivitätswerte ermittelt, aus denen die momentane Rotorposition extrapoliert wird.

Die Anwendung des letztgenannten Verfahrens beschränkt sich jedoch auf mehrphasigen Reluktansmotoren und liefert lediglich eine ungefähre Abschätzung.

Schließlich ist aus DE-C-196 53 460 ein Verfahren zur sensorlosen Schritterkennung bei Schrittmotoren durch Analyse der Motorbestromung bekannt, wobei während des Betriebs die verschiedenen Motorwicklungsanschlüsse hochohmig geschaltet werden und die Dauer der Antwortsignale an den hochohmig geschalteten Motorwicklungsanschlüssen ausgewertet werden, um zu erkennen, ob sich der Schrittmotor um einen Schritt bewegt hat. Dabei wird in das Bestromungsschema eingegriffen, indem dieses für kurze Zeit verändert wird, und zwar durch Einprägen eines definierten Stroms auf eine zweite Motorwicklung, auf die nach einer Stromrichtungsumkehr der Motorwicklungsbestromung einer ersten Motorwicklung geschaltet wird, und ferner durch Hochohmig-Schalten eines Motorwicklungsanschlusses der zweiten Motorwicklung.

Aufgabe der Erfindung ist es, ein Verfahren zur Erlangung eines ersten Hinweises einer Blockierung bei ein oder mehrere Motorwicklungen aufweisenden unipolaren Schrittmotoren anzugeben.

Die Erfindung wird durch die Merkmale des Verfahrensanspruchs 1 definiert. Die abhängigen Ansprüche definieren einzelne Ausgestaltungen der Erfindung.

Die Erfindung ist insbesondere darin zu sehen, dass das Bestromungsschema und die Signaldetektion für sämtliche drei zuvor genannten Schrittmotortypen angepasst ist. Damit ist es möglich, das erfindungsgemäße Blockiererkennungsverfahren auch auf unipolare Schrittmotoren, 3-phasige Schrittmotoren und bipolare Schrittmotoren mit anderen als in DE-C-196 53 460 beschriebenen Bestromungsformen anzuwenden. Ferner kann das erfindungsgemäße Verfahren bei sämtlichen Motortypen auch bei PWM-Bestromung genutzt werden, um unter anderem Drehmomentanpassungen (beispielsweise versorgungsspannungsunabhängig) oder ein Mikrostepping-Verfahren nutzen zu können.

Weitere Merkmale der Erfindung und deren Vorteile lassen sich wie folgt zusammenfassen:
- Das Konzept kann im Gegensatz zu anderen auf dem Markt befindlichen Lösungen schaltungstechnisch sehr flächensparend auf einen IC umgesetzt werden, da es zum großen Teil digital (also "shrinkbar") realisiert ist.
- Es benötigt weder einen ADC noch einen Controller, sollten diese aber im IC oder System vorhanden sein, so können sie genutzt werden.
- Die Auswertung kann ganz oder zum Teil per Software, anstatt in diskreter Logik erfolgen.
- Das erfindungsgemäße Konzept ist im Gegensatz zu anderen auf dem Markt befindlichen Lösungen sehr tolerant gegenüber Umgebungs- und Motorparametern.
- Das erfindungsgemäße Konzept weist im Gegensatz zu anderen auf dem Markt befindlichen Lösungen deutlich zuverlässigere Eigenschaften auf.

Ferner sind gemäß diverser Ausführungsformen der Erfindung ein oder mehrere der nachfolgend genannten Merkmale vorgesehen, nämlich dass
a) Motortypen
   a.1) - die Realisierung für x-phasige, insbesondere 2-phasigen unipolare Schrittmotoren für
      - Common Node = neg. Versorgung,
      - Common Node = pos. Versorgung,
      - Common Node eines Spulenpaares an neg. Versorgung des anderen Spulenpaares an pos. Versorgung,
         (Es kann damit für unipolare Motoren und bipolare die gleiche Ansteuerschaltung genutzt werden, wobei diese Art der Ansteuerung auch ohne Blockiererkennung erfolgen kann, und zwar bei allen Bestromungstypen)
      - bei 1-Strang Block-Bestromung mit und ohne PWM,
      - bei 2-Strang Block-Bestromung mit und ohne PWM,
      - Halbschrittverfahren mit und ohne PWM
      - bei Mikrostepping mit PWM (Sinus, Trapez, andere Kurverformen),
      - bei Mikrostepping mit PWM mit Drehmoment und /oder Geschwindigkeitsregelung),
      erfolgt
   a.2) - die Realisierung für x-phasige, insbesondere 3-phasige Motoren in
      - Stern Schaltung,
      - Dreieck Schaltung (mit und ohne virtuellem Sternpunkt),
      - alle Bestromungstypen mit:
      - Block-Kommmutierung,
      - Mikrostepping mit PWM (Sinus, Trapez, andere Kurverformen),
      - Mikrostepping mit PWM (insbesondere für Raumvektormodulation),
      - Mikrostepping mit PWM mit Drehmoment und /oder Geschwindigkeitsregelung unabhängig v. d. Modulationsart(s.o.),
   erfolgt;
b) Referenz-Bildung
   b.1) - die Versorgung (positiv, negativ, GND) oder sonstige Referenzspannungen als Komparator-Referenz-Potential(e) oder als Basis zur Bildung der Referenzpotentiale dienen,
      - optional Mess- und Referenzpotentiale heruntergeteilt werden,
   b.2) - optional die Detektion von Spannungsabfällen über Treiber mittels kapazitiver Kopplung erfolgt und
      - optional eine kapazitive Spannungsteilung erfolgt;
   b.3) - das Referenzpotential dem x-fachen des Versorgungspotentiales entspricht,
   b.4) insbesondere in der Form, dass x als im Wesentlichen 2 gewählt ist,
   b.5) insbesondere in der Form, dass zu der Grund-Referenz noch ein positiver oder negativer Offset addiert wird,
   b.6) - die Referenzbildung im Betrieb, abhängig von Umgebungsparametern (wie z. B. Betriebsspannung, Temperatur, Motorsituation) dynamisch umschaltbar sind;
c) Vorverstärkung
   c.1) - optional das Signal vorverstärkt wird (üblicherweise analog);
   c.2) - die Vorverstärkung in analoger Technik ausgelegt ist oder
      - die Vorverstärkung in SC-Technik ausgelegt ist;
d) Komparator
   d.1) - der Komparator in analoger Technik ausgelegt ist oder
   d.2) - der Komparator in SC-Technik ausgelegt ist,
   d.3) - die Vorverstärkung und Komparator in einer gemeinsamen SC-Technik realisiert ist,
   d.4) - der Komparator mittels eines einzigen Transistors gegen eine Grundlast gebildet wird, wobei der Spannungsfehler durch die Transistor-Schwellspannung akzeptiert wird, insbesondere unter Ausnutzung vorhandener, zu diesem Zwecke modifizierter Strukturen zum Zwecke de ESD Schützen von Bauteilen,
   d.5) - gemäß d.4), jedoch mit einer Schaltung zu Kompensation des Spannungsfehlers
e) Klemmstruktur:
   e.1 - beim Erreichen der Referenz das Messsignal bei dieser Schwelle geklemmt wird,
   e.2) - bei Erreichen Referenz das Messsignal nicht geklemmt wird,
   e.3) - die Art der Klemm-Funktion im Betrieb auch dynamisch umschaltbar gestaltet sind,
   e.4) die Spannungsbegrenzung (Klemm) durch eine oder mehrere Dioden und/oder andere Halbleiter realisiert ist,
   e.5) - die Spannungsbegrenzung so realisiert ist, dass zunächst mit den zuvor unter 38) beschriebenen Bauteilen eine Spannungsdetektion erfolgt, die als Folge einen Leistungstreiber aktiviert, welcher einen großen Teil der Stromlast trägt,
   e.6) - der Leistungstreiber zum Klemmen ein zur Motor Ansteuerung vorhandener Treiber ist,
   e.7) - der Leistungstreiber eigens zu diesem Zweck implementiert wird,
   e.8) - der Leistungstreiber ein zum Schutz der Baugruppe vorhandenes Bauelement ist; (z. B. ESD-Schutz-Transistor),
   e.9) - der Stromfluss durch diese Bauteile überwacht wird,
   e.10) - lediglich der Stromfluss an einem dieser Bauteile überwacht wird,
   e.11) - zur Spannungsüberwachung an einem oder mehreren Bauteilen an diesen Bauteilen eine zusätzliche Last (Stromquelle oder Widerstand) angeschlossen ist, welche im inaktiven Fall (Spannungsbegrenzung nicht aktiv) einen definierten Signalpegel sicherstellt;
f) Variante mit Zeitzähler (Baugruppe: Zeitzähler)
   f.1) - die Länge des Komparatorsignals durch einen Zeit-Zähler bestimmt wird,
   f.2) - der Zähler in Logik-Gattern ausgeführt ist,
   f.3) - eine TMU (Time-Measurement-Unit) zur Auszählung genutzt wird,
   f.4) - ein Controller/Prozessor direkt die Zeitzählung vornimmt,
   f.5) - der Zähler logarithmisch arbeitet, also mit zunehmender Zählzeit langsamer zählt (zur deutlichen Reduzierung der Zählergröße und Vereinfachung der nachfolgenden Auswertung),
   f.6) - die Logarithmierung in (der Applikation angepassten) groben Stufen erfolgt und somit kontrolliert fehlerbehaftet sein darf, um die Produktionskosten möglichst gering zu halten,
g) Variante mit Zeitzähler (Baugruppe: Auswertung und Filter)
   g.1) - eine Logik die Zeitzählungen auswertet und/oder filtert,
   g.2) - ein Controller/Prozessor die Zeitzählungen auswertet und/oder filtert,
   g.3) - die Auswertung und/oder Filterung per Software erfolgt,
   g.4) - die Software im System umprogrammiert werden kann (z.B. mittels FLASH),
h) Variante mit Direktwandlung durch ADC
   h.1) - die Spannungen ohne Komparator mittels ADC mit oder ohne Vorverstärkung digitalisiert werden,
   h.2) - der ADC durch eine Logik ausgewertet wird,
   h.3) - der ADC durch einen Controller oder Prozessor ausgewertet wird,
   h.4) - die Auswertung per Software erfolgt,
   h.5) - die Software umprogrammiert werden kann (z.B. mittels FLASH), um eine Anpassung an versch. Motortypen zu ermöglichen,
i) Bestimmung der Belastung des Motors
   i.1) - die wie dargestellt ermittelte Zeit der Umbestromungsphase kann nicht nur zur Analyse der Blockierung eines Motors, sondern auch zur Ermittlung der aktuellen Belastung des Motors, genutzt werden,
      - das Wissen um die Last genutzt wird, um mittels PM-Beeinflussung die Bestromung des Motors auf das notwendige Maß anpassen (zur Reduktion von: Stromaufnahme, Störungen, Temperatur) oder erhöhen zu können (zur Verhinderung von Schrittverlusten bzw. Blockierungen),
   i.2) - das Wissen um die Last genutzt wird, um beim Beschleunigen und Bremsen des Motors maximales Drehmoment und maximale Dynamik zu erreichen,
   i.3) - das Wissen um die Last genutzt wird, um das Drehmoment des Motors gezielt und bedarfsgerecht in bestimmten Betriebssituationen zu reduzieren,
   i.4) - das Wissen um die Last genutzt wird, um die Abhängigkeit des Drehmomentes des Motors von der Versorgungsspannung zu kompensieren,
   i.5) - das Wissen um die Last genutzt wird, um die Abhängigkeit des Drehmomentes des Motors von der Temperatur zu kompensieren.

In vorteilhafter Weiterbildung der Erfindung ist vorgesehen, dass bei alternierenden Schwankungen der Längen der Zeitintervalle um mehr als eine vorgebbare Differenz auf einen ersten Hinweis auf eine mögliche Blockierung erkannt wird.

Bei einer weiteren vorteilhaften Ausgestaltung der Erfindung ist vorgesehen, dass die Ergebnisse der Auswertung der Längen der Zeitintervalle zur Unterdrückung des Einflusses von Störungen gefiltert werden.

In vorteilhafter Weiterbildung der Erfindung ist vorgesehen, dass die aktuelle Drehposition des Schrittmotors bzw. seines Ankers zum Zeitpunkt der Blockiererkennung ermittelt wird und/oder dass die Bestromung des Schrittmotors bei einer Blockiererkennung zur Reduktion von Geräuschbildung und/oder Minimierung einer mechanischen Überlast für den Schrittmotor, ein mit diesem in Wirkverbindung stehenden Getriebe und/oder anderen Komponenten beendet wird.

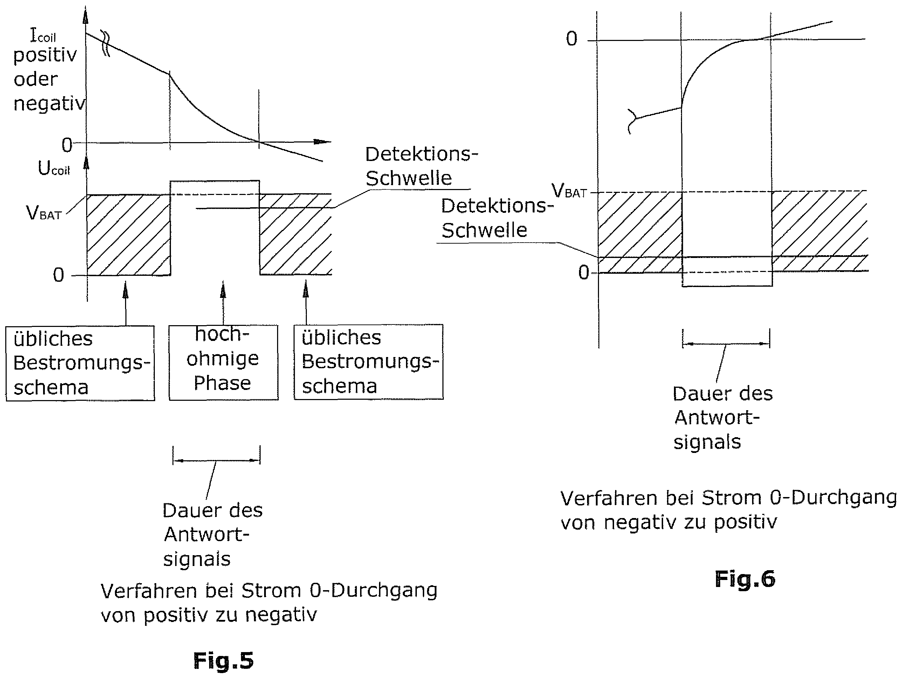

Bei einer weiteren vorteilhaften Ausgestaltung der Erfindung ist vorgesehen, dass der Übergang der Bestromung einer Motorwicklung zur Bestromung der Gegenmotorwicklung nicht zeitgleich, sondern mit einem vorgebbaren Timing behaftet, insbesondere bei PWM-Sinus/Trapez- etc.-Kommutierung mit einem vorgebbaren, auf den Nulldurchgang bezogenen Timing behaftet durchgeführt wird, und dass insbesondere zu einer bestimmten Zeit vor dem Nulldurchgang bei einem noch verbliebenem Reststrom von der für die Bestromungsvariante kennzeichnenden Kurvenform abweichend diese unterbrochen und der Motorwicklungsanschluss hochohmig geschaltet wird (ähnlich Fig. 5).

In vorteilhafter Weiterbildung der Erfindung ist vorgesehen, dass zur Erfassung der Antwortsignale ein Peak-Detektor die Spitze des Antwortsignals ermittelt und der Vergleich zur Ermittlung des Endes des Antwortsignals mit einer Schwelle erfolgt, die von der Peak-Spannung des Peak-Detektors abgängig ist und insbesondere in einem bestimmten Teilungsverhältnis zu dieser steht.

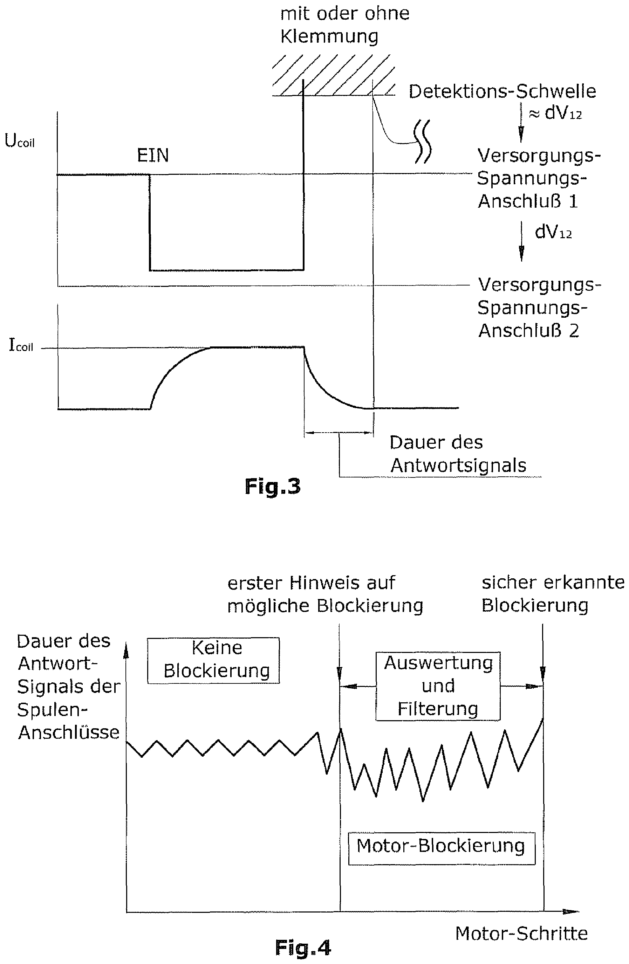

Bei einer weiteren vorteilhaften Ausgestaltung der Erfindung ist vorgesehen, dass bei der Erfassung der Antwortsignale beim Erreichen der Schwelle das Antwortsignal geklemmt und somit der rückgespeiste Strom gegen die Versorgungsspannung abgeleitet wird, gegen die die Schalter im eingeschalteten Zustand schalten (Fig. 3, siehe Anmerkung "mit und ohne Klemmung").

In vorteilhafter Weiterbildung der Erfindung ist vorgesehen, dass zur Erfassung der Antwortsignale die Schwelle und speziell bei unipolaren Schrittmotoren, bei Bedarf auch die Klemmeigenschaft im Betrieb, abgängig von Parametern (wie beispielsweise die Betriebsspannung, die Temperatur und die Motorsituation) dynamisch umschaltbar geschaltet ist/sind.

Bei einer weiteren vorteilhaften Ausgestaltung der Erfindung ist vorgesehen, dass zur kostensparenden Implementierung die Bestimmung der Dauer der Zeitintervalle mittels eines logarithmischen und daher kürzeren Zählers durchgeführt wird, wobei die nachfolgenden mathematischen Operationen in wiederum kostensparender Strich-Rechnung (Plus-/Minus-Rechnung) anstatt in Punktrechnung (Multiplikation/Division) durchgeführt werden kann.

In vorteilhafter Weiterbildung der Erfindung ist vorgesehen, dass die Erfassung des Antwortsignals mit einem ADC erfolgt, wobei die Aufgaben der Schwellwertbildung sowie die Ermittlung der Dauer des Antwortsignals, die Differenzbildungen sowie Filterfunktionen ganz oder teilweise in Logik bzw. mit Hilfe eines Controllers per Software durchgeführt werden können.

Bei einer weiteren vorteilhaften Ausgestaltung der Erfindung ist vorgesehen,
- dass beim ersten Auftreten von Abweichungen die momentanen Positionswerte (in Schritten oder Winkeln oder dergleichen) zwischengespeichert werden (Fig. 4),
- dass bei der späteren Detektion einer Blockierung oder anderen Lastbedingung auf diesen zwischengespeicherten Wert zurückgegriffen wird, um den durch die Ansprechverzögerung des Filters bedingten Fehler der Position zu kompensieren bzw. zu minimieren (Fig. 4),
- dass bei der späteren Detektion einer Blockierung oder anderen Lastbedingung optional ein fester oder variabler Korrekturwert zu dem zwischengespeicherten momentanen Positionswert addiert oder von diesem subtrahiert wird, um verbleibende Restfehler des Verfahrens zu minimieren, und
- dass bei der späteren Nicht-Detektion einer Blockierung die zwischengespeicherten Werte verworfen werden.

In vorteilhafter Weiterbildung der Erfindung ist vorgesehen, dass die Vermessung der Dauer der Zeitintervalle abhängig von der Betriebsbedingung entweder mit Beginn der Hochohmig-Schaltung startet oder mit der Erkennung des Beginns des Zeitintervalls.

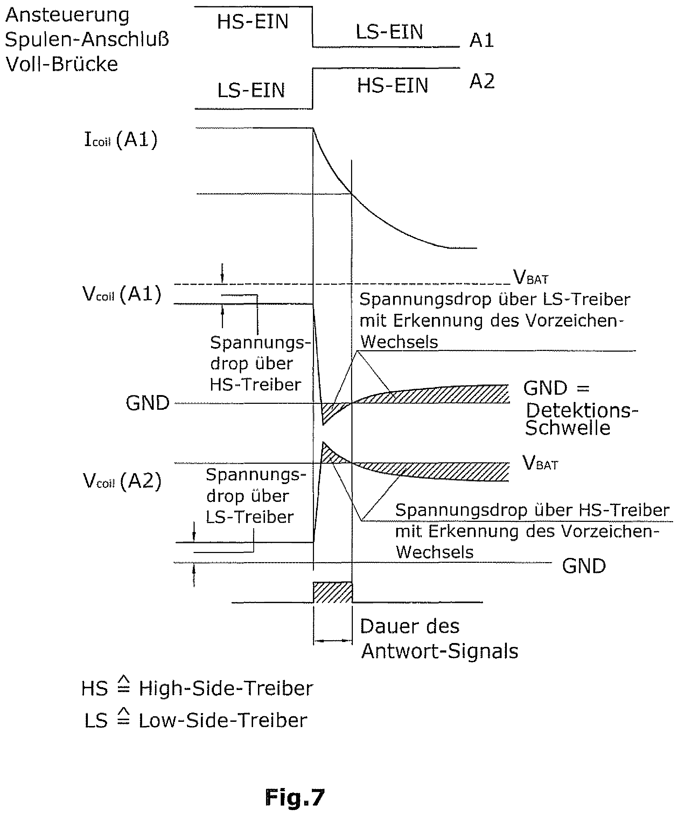

Bei einer weiteren vorteilhaften Ausgestaltung der Erfindung ist vorgesehen, 3-phasige Schrittmotoren anzuwenden, gekennzeichnet durch
- Wegfall des Hochohmig-Schaltens eines Wicklungsanschlusses,
- Überwachen der Polarität des Spannungsabfalls (ähnlich Fig. 7) über die Schalter und Ermittlung des Zeitpunktes des Wechsels der Polarität,
- Ermitteln der Dauer des Differenzzeitintervalls durch Ermitteln der Zeitdifferenz zwischen den Motor-Kommutierungen und den Zeitpunkten des Polaritätswechsels und
- Auswerten, wie in den zuvor genannten Ansprüchen beschrieben.

Die Erfindung wird nachfolgend anhand mehrerer Ausführungsbeispiele und unter Bezugnahme auf die Zeichnung näher erläutert. Im Einzelnen zeigen dabei:
- Fign. 1 bis 3: schematische Darstellungen und Signalverläufe zur Erläuterung des Verfahrens zur Blockiererkennung am Beispiel eines unipolaren Schrittmotors,
- Fig. 4: schematische Darstellung des (Antwort-)Signalverlaufs, anhand dessen unabhängig vom Motortyp eine Blockierung erkannt werden kann,
- Fign. 5 und 6: schematische Darstellungen und Signalverläufe zur Verdeutlichung des Verfahrens zur Blockiererkennung bei einem 3-phasigen Schrittmotor und
- Fig. 7: schematische Darstellungen und Signalverläufe zur Erläuterung des Verfahrens zur Blockiererkennung bei einem bipolaren Schrittmotor.

### Beschreibung einer Variante der Erfindung bei Nutzung für einen Unipolarmotor:

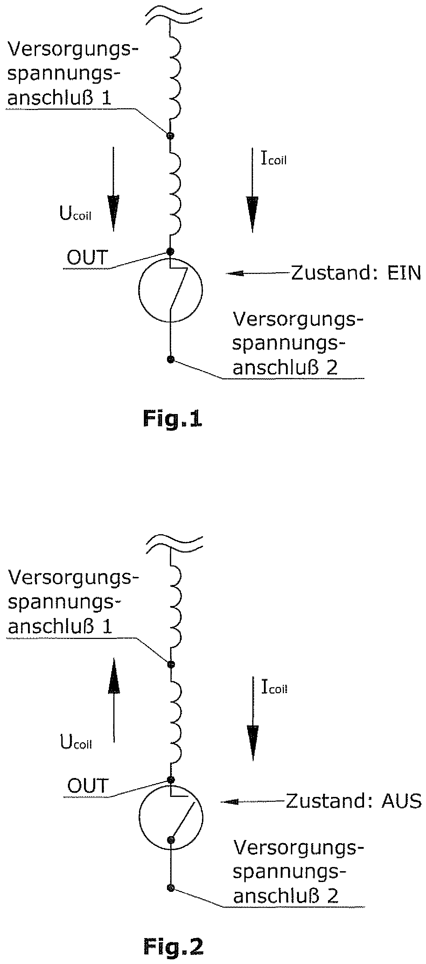

Um eine Blockierung eines Unipolarmotors erkennen zu können, wird erfindungsgemäß in der Kommutierungsphase der Wicklungsstrom überwacht. Fign. 1 und 2 zeigen die Verhältnisse in den beiden Zeitabschnitten einer Stromkommutierung.

In Fig. 1 ist gezeigt, dass ein Low-Side-Schalter eines Wicklungspaares (hier beispielhaft mit Mittelanzapfung) eines Unipolar-Motors einen Strom von einem Versorgungsspannungsanschluss 1 (hier beispielhaft VBAT) zum anderen Versorgungsspannungsanschluss 2 (hier beispielhaft GND) durch die Wicklung treibt.

Die Auswertephase des Verfahrens beginnt im zweiten Zeitabschnitt (siehe Fig. 2), wenn der Schalter bzw. Transistor, welcher den Wicklungsanschluss gegen Versorgungsspannungsanschluss 2 (hier beispielhaft GND) schaltet, ausgeschaltet wird.

In dieser Phase bleibt der Wicklungsstrom auf Grund der Induktivität der Motorwicklung zunächst konstant. Als Folge davon springt die Spannung am Wicklungsanschluss (hier OUT) nicht nur bis zum Potential des Versorgungsspannungsanschluss 1 (hier beispielhaft VBAT), sondern darüber hinaus. Der Endwert der Spannung des Wicklungsanschlusses (hier OUT) ist abhängig von der Höhe des vormals durch die Wicklung geflossenen Stromes und der Drehbewegung des Motors, wird aber zusätzlich durch andere Bedingungen des Systems, z. B. Klemmbedingung durch optionale Zehnerdioden, limitiert. Üblicherweise erreicht der Überschwinger aber eine Höhe von mindestens der Spannungsdifferenz zwischen Versorgungsspannungsanschluss 1 (hier beispielhaft VBAT) zum anderen Versorgungsspannungsanschluss 2 (hier beispielhaft GND).

Da der Spannungsabfall über der Induktivität bzw. über der Motorwicklung sein Vorzeichen umgekehrt, wenn der zweite Zeitabschnitt erreicht ist, beginnt der Wicklungsstrom abzunehmen. Die Fign. 3 und 4 zeigen vereinfachte Zeitdiagramme (Spannungs- und Stromverläufe) während des Kommutierungsprozesses.

Sobald der Wicklungsstrom verschwunden ist (0 Ampere), führt das dazu, dass die Spannung an OUT in Richtung Versorgungsspannungsanschluss 1 (hier beispielhaft VBAT) strebt.

Dieser Zustand wird detektiert, indem die Spannung an OUT beobachtet wird und die Dauer erfasst wird, für die die Spannung an OUT gleich oder mindestens gleich einer Referenzspannung, üblicherweise ca. 2* die Spannung an Versorgungsspannungsanschluss 1, ist.

Dabei ist die Genauigkeit der Schwelle relativ unbedeutend. Sie sollte aber nicht zu weit unter 2^{∗}VBAT bzw. 2* der Spannung am Versorgungsanschluss 1 liegen, da darunter die Rückspeisespannungen des offenen Wicklungsanschlusses durch den generatorischen Effekt der Motoren liegt.

Läge die Schwelle in diesem Bereich, würde der generatorischen Effekt die Erkennung von I=0A überlagern und damit das Verfahren recht unsicher.
Die Dauer der Rückspeisung wird an eine Auswerteeinheit übertragen. Um eine Blockierung erkennen zu können, muss die Auswerteeinheit die Veränderung dieser Perioden bewerten.

Ein freilaufender, d. h. nicht blockierter Motor erzeugt vergleichsweise konstante Werte für die Zeitspannen, für die die Spannung an OUT gleich oder mindestens gleich einer Referenzspannung, üblicherweise das 2-fache der Spannung an Versorgungsspannungsanschluss 1, ist. Sobald der Motor blockiert ist, zeigt die Sequenz von Perioden eine signifikante Veränderung (siehe Fig. 4), da die Motorwicklungen durch die Blockierbedingung beeinflusst werden.

Schwellen, Dauermessungen und Auswertungen können mit Komparatoren plus Digitaltechnik incl. Mikrokontrollern und Software realisiert werden, es ist aber genauso möglich, die Spannungen der Wicklungsanschlüsse mit einem ADC zu erfassen und Schwellen, Dauermessungen und Auswertungen mit Digitaltechnik und/oder Mikrokontrollern und Software zu realisieren.

Die Fign. 5 und 6 zeigen schematisch die Signalverläufe bei Anwendung des erfindungsgemäßen Verfahrens auf einen 3-phasigen Schrittmotor.

Schließlich repräsentieren die Signalverläufe der Fig. 7 die Anwendung des erfindungsgemäßen Verfahrens bei einem bipolaren Schrittmotor.

Die Dauer der Rückspeisung wird an eine Auswerteeinheit übertragen. Um eine Blockierung erkennen zu können, muss die Auswerteeinheit die Veränderung dieser Perioden bewerten.

Ein freilaufender, d. h. nicht blockierter Motor erzeugt vergleichsweise konstante Werte für die Zeitspannen, für die die Spannung an OUT gleich oder mindestens gleich einer Referenzspannung, üblicherweise das 2-fache der Spannung an Versorgungsspannungsanschluss 1, ist. Sobald der Motor blockiert ist, zeigt die Sequenz von Perioden eine signifikante Veränderung (siehe Fig. 4), da die Motorwicklungen durch die Blockierbedingung beeinflusst werden.

Schwellen, Dauermessungen und Auswertungen können mit Komparatoren plus Digitaltechnik incl. Mikrokontrollern und Software realisiert werden, es ist aber genauso möglich, die Spannungen der Wicklungsanschlüsse mit einem ADC zu erfassen und Schwellen, Dauermessungen und Auswertungen mit Digitaltechnik und/oder Mikrokontrollern und Software zu realisieren.

Die Fign. 5 und 6 zeigen schematisch die Signalverläufe bei Anwendung des erfindungsgemäßen Verfahrens auf einen 3-phasigen Schrittmotor.

Schließlich repräsentieren die Signalverläufe der Fig. 7 die Anwendung des erfindungsgemäßen Verfahrens bei einem bipolaren Schrittmotor.

## Patentansprüche

1. Verfahren zur Erkennung eines Hinweises auf eine mögliche Blockierung bei ein oder mehrere Motorwicklungen aufweisenden unipolaren Schrittmotoren durch Analyse der Motorbestromung und unter Berücksichtigung von auftretenden Rezirkulationsströmen, mit den folgenden Verfahrensschritten:
- Einprägen eines Betriebsstroms (Icoil) gemäß einer Bestromungsvariante für den Betrieb des unipolaren Schrittmotors bei unipolarer Ansteuerung in dessen eine oder mehrere Motorwicklungen mittels eines steuerbaren Schalters pro Motorwicklungsanschluss, wobei der Schalter den betreffenden Motorwicklungsanschluss wahlweise mit einem ersten Versorgungsspannungsanschluss (1, VBAT) verbindet und wobei die auf gemeinsamem Potential liegenden Anschlüsse jeder Motorwicklung mit einem zweiten Versorgungsspannungsanschluss (2, GND) dauerhaft verbunden sind,
- wobei die Bestromungsvariante zwischen dem Umschalten der Motorwicklungen Phasen aufweist, in denen die mit den Schaltern verbundenen Motorwickelanschlüsse einer Motorwicklung hochohmig geschaltet werden,
- Erfassen der durch den Rezirkulationsstrom beeinflussten Spannung (Vcoil) an einem hochohmig geschalteten Motorwicklungsanschluss zumindest für die hochohmige Phase und Vergleich dieser Spannung mit einem Schwellwert, der mindestens das 1,5 fache oder mindestens das 1,8 fache, der Versorgungsspannung beträgt,
- zeitliches Erfassen der Länge eines durch den Rezirkulationsstrom beeinflussten Zeitintervalls, für das die Spannung an dem hochohmig geschalteten Motorwicklungsanschluss größer als der Schwellwert ist,
- Vergleichen der durch den jeweiligen Rezirkulationsstrom beeinflussten Längen der Intervalle für mehrere jeweils hochohmig geschaltete Motorwicklungsanschlüsse und
- Erkennen einer möglichen Blockierung anhand der Vergleiche der Längen der Intervalle, indem bei alternierenden Schwankungen der Längen der Zeitintervalle um mehr als eine vorgebbare Differenz als Hinweis auf eine mögliche Blockierung erkannt wird.

2. Verfahren nach Anspruch 1, **dadurch gekennzeichnet, dass** die zumindest für die hochohmige Phase erfasste, durch den Rezirkulationsstrom beeinflusste Spannung an einem hochohmig geschalteten Motorwicklungsanschluss mit einem Schwellwert verglichen wird, der mindestens das 2,0 fache und vorzugsweise mindestens das 2,5 fache oder mindestens ein größeres ganzzahliges oder nichtganzzahliges Vielfaches der Versorgungsspannung beträgt.

3. Verfahren nach Anspruch 1 oder 2, **dadurch gekennzeichnet, dass** die Ergebnisse der Auswertung der Längen der Zeitintervalle zur Unterdrückung des Einflusses von Störungen gefiltert werden.

4. Verfahren nach einem der Ansprüche 1 bis 3, **dadurch gekennzeichnet, dass** die aktuelle Drehposition des Schrittmotors bzw. seines Ankers zum Zeitpunkt der Blockiererkennung ermittelt wird und/oder dass die Bestromung des Schrittmotors bei einer Blockiererkennung zur Reduktion von Geräuschbildung und/oder Minimierung einer mechanischen Überlast für den Schrittmotor, ein mit diesem in Wirkverbindung stehenden Getriebe und/oder anderen Komponenten beendet wird.

5. Verfahren nach einem der Ansprüche 1 bis 4, **dadurch gekennzeichnet, dass** der Übergang der Bestromung einer Motorwicklung zur Bestromung der Gegenmotorwicklung nicht zeitgleich, sondern mit einem vorgebbaren Timing behaftet, insbesondere bei PWM-Sinus/Trapez- etc. -Kommutierung mit einem vorgebbaren, auf den Nulldurchgang bezogenen Timing behaftet durchgeführt wird, und dass insbesondere zu einer bestimmten Zeit vor dem Nulldurchgang des Stroms bei noch verbliebenem Reststrom von der für die Bestromungsvariante kennzeichnenden Kurvenform abweichend diese unterbrochen und der Motorwicklungsanschluss hochohmig geschaltet wird.

6. Verfahren nach einem der Ansprüche 1 bis 5, **dadurch gekennzeichnet, dass** zur Erfassung der Antwortsignale ein Peak-Detektor die Spitze des Antwortsignals ermittelt und der Vergleich zur Ermittlung des Endes des Antwortsignals mit einer Schwelle erfolgt, die von der Peak-Spannung des Peak-Detektors abgängig ist und insbesondere in einem bestimmten Teilungsverhältnis zu dieser steht.

7. Verfahren nach einem der Ansprüche 1 bis 6, **dadurch gekennzeichnet, dass** bei der Erfassung der Antwortsignale beim Erreichen der Schwelle das Antwortsignal geklemmt und somit der rückgespeiste Strom gegen die Versorgungsspannung abgeleitet wird, gegen die die Schalter im eingeschalteten Zustand schalten.

8. Verfahren nach einem der Ansprüche 1 bis 7, **dadurch gekennzeichnet, dass** zur Erfassung der Antwortsignale die Schwelle und bei Bedarf auch die Klemmeigenschaft im Betrieb, abgängig von Betriebsparametern dynamisch umschaltbar geschaltet ist/sind.

9. Verfahren nach Anspruch 8, **dadurch gekennzeichnet, dass** es sich bei den Betriebsparametern um die Betriebsspannung, die Temperatur und die Motorsituation handelt.

10. Verfahren nach einem der Ansprüche 1 bis 9, **dadurch gekennzeichnet, dass** zur kostensparenden Implementierung die Bestimmung der Dauer der Zeitintervalle mittels eines logarithmischen und daher kürzeren Zählers durchgeführt wird, wobei die nachfolgenden mathematischen Operationen in wiederum kostensparender Strich-Rechnung, d.h. Plus- und/oder Minus-Rechnung, anstatt in Punktrechnung, d.h. Multiplikation und/oder Division, durchgeführt werden.

11. Verfahren nach einem der Ansprüche 1 bis 10, **dadurch gekennzeichnet, dass** die Erfassung des Antwortsignals mit einem ADC erfolgt, wobei die Aufgaben der Schwellwertbildung sowie die Ermittlung der Dauer des Antwortsignals, die Differenzbildungen sowie Filterfunktionen ganz oder teilweise in Logik bzw. mit Hilfe eines Controllers per Software durchgeführt werden.

12. Verfahren nach einem der Ansprüche 1 bis 11, **dadurch gekennzeichnet,**
- **dass** beim ersten Auftreten von Abweichungen die momentanen Positionswerte insbesondere in Schritten oder Winkeln oder dergleichen zwischengespeichert werden,
- **dass** bei der späteren Detektion einer Blockierung oder anderen Lastbedingung auf diesen zwischengespeicherten Wert zurückgegriffen wird, um den durch die Ansprechverzögerung des Filters bedingten Fehler der Position zu kompensieren bzw. zu minimieren,
- **dass** bei der späteren Detektion einer Blockierung oder anderen Lastbedingung optional ein fester oder variabler Korrekturwert zu dem zwischengespeicherten momentanen Positionswert addiert oder von diesem subtrahiert wird, um verbleibende Restfehler des Verfahrens zu minimieren, und
- **dass** bei der späteren Nicht-Detektion einer Blockierung die zwischengespeicherten Werte verworfen werden.

13. Verfahren nach einem der Ansprüche 1 bis 12, **dadurch gekennzeichnet, dass** die Vermessung der Dauer der Zeitintervalle abhängig von der Betriebsbedingung entweder mit Beginn der Hochohmig-Schaltung startet oder mit der Erkennung des Beginns des Zeitintervalls.

14. Verwendung des Verfahrens nach einem der vorhergehenden Ansprüche zur Zeitoptimierung von Initialisierungsläufen des Schrittmotors bzw. einer den Schrittmotor aufweisenden Einheit mit Verfahrung der Schrittmotorwelle oder eines mit diesem in Wirkverbindung stehenden Stellglieds gegen einen Anschlag und/oder zur Nutzung der Zeitintervallermittlungen zur Beeinflussung der Schrittmotoransteuerung insbesondere hinsichtlich Motorgeschwindigkeit und/oder Drehmoment.

## Claims

1. A method for detecting an indication of a possible blockage of unipolar stepper motors having one or more motor windings by analyzing the motor current supply and with consideration o occurring recirculation currents, comprising the following method steps:
- impressing an operating current (Icoil) according to a current supply variant for the operation of the unipolar stepper motor under unipolar control into the one or more motor windings thereof by means of one controllable switch per motor winding connection, wherein the switch selectively connects the respective motor winding connection to a first supply voltage connection (1, VBAT) and wherein the connections of each motor winding lying at a common potential are permanently connected to a second supply voltage connection (2, GND),
- wherein the current supply variant has phases between the switching of the motor windings, in which phases the motor winding connections of a motor winding connected to the switches are switched to high impedance,
- detecting the voltage (Vcoil) influenced by the recirculation current at a motor winding connection switched to high impedance at least for the high-impedance phase and comparing said voltage to a threshold that is at least 1.5 times or at least 1.8 times the supply voltage,
- chronologically detecting the length of a time interval influenced by the recirculation current, during which interval the voltage at the motor winding connection switched to high impedance is larger than the threshold,
- comparing the lengths of the intervals influenced by the respective recirculation currents for a plurality of motor winding connections each switched to high impedance, and
- detecting a possible blockage based on the comparisons of the lengths of the intervals by detecting alternating variations of the lengths of the time intervals by more than a predeterminable difference as an indication for a possible blockage.

2. The method of claim 1, **characterized in that** the voltage influenced by the recirculation current the motor winding connection switched to high impedance the motor winding connection switched to high impedance the motor winding connection switched to high impedance is compared to a threshold that is at least 2.0 times and preferably at least 2.5 times or at least a higher integer or non-integer multiple of the supply voltage.

3. The method according to claim 1 or 2, **characterized in that** the results of the evaluation of the lengths of the time intervals are filtered to suppress the influence of interferences.

4. The method according to any one of claims 1 to 3, **characterized in that** the present rotational position of the stepper motor and/or the armature thereof is determined at the point of time when the blockage is detected, and/or that the current supply of the stepper motor is stopped when a blockage is detected to reduce generation of noise and/or to minimize a mechanical overload of the stepper motor, a gearbox operatively connected to said motor and/or other components.

5. The method according to any one of claims 1 to 4, **characterized in that** the transition from the current supply of a motor winding to the current supply of the countercurrent motor winding is not carried out simultaneously but with a predeterminable timing, in particular in the case of a PWM sinusoidal/trapezoidal etc. commutation with a predeterminable timing related to the zero crossing, and that in particular at a specific time before the zero crossing at a remaining residual current the waveform, deviating from the waveform characterizing the current supply variant, is interrupted and the motor winding connection is switched to high impedance.

6. The method according to any one of claims 1 to 5, **characterized in that** for detecting the response signals a peak detector determines the peak of the response signal and the comparison for determining the end of the response signal is carried out using a threshold which depends on the peak voltage of the peak detector and in particular shows a specific division ratio to said voltage.

7. The method according to any one of claims 1 to 6, **characterized in that**, upon detection of the response signal when the threshold is reached, the response signal is clamped and thus the current supplied back is discharged against the supply voltage against which the switches switch in the on-state.

8. The method according to any one of claims 1 to 7, **characterized in that** for detection of the response signals the threshold and the clamping characteristic during operation, if necessary, is/are connected such that it/they is/are adapted to be dynamically changed over depending on operating parameters.

9. The method according to claim 8, **characterized in that** the operating parameters are the operating voltage, the temperature and the motor situation.

10. The method according to any one of claims 1 to 9, **characterized in that** for the purpose of cost-saving implementation the determination of the duration of the time intervals is carried out by means of a logarithmic and thus shorter counter, wherein the subsequent mathematical operations can be carried out via cost-saving addition/subtraction, i.e. plus and/or minus calculation, instead of multiplied by/divided by calculation, i.e. multiplication and/or division.

11. The method according to any one of claims 1 to 10, **characterized in that** the detection of the response signal is carried out by an ADC, wherein the tasks of threshold value generation as well as the determination of the duration of the response signal, the difference generations as well as filter functions can be fully or partly carried out through a logic and/or with the aid of a controller through a software.

12. The method according to any one of claims 1 to 11, **characterized in**
- **that**, when deviations occur for the first time, the momentary position values are buffered in particular in steps or angles or the like,
- **that** during later detection of a blockage or another load condition this buffered value is used to compensate for or to minimize the position error caused by the response delay of the filter,
- **that** during later detection of a blockage or another load condition optionally a fixed or a variable correction value is added to the buffered momentary position value or subtracted from said value to minimize remaining residual errors of the process, and
- **that** during later non-detection of a blockage the buffered values are discarded.

13. The method according to any one of claims 1 to 12, **characterized in that** the measurement of the duration of the time intervals starts either at the beginning of switching to high impedance or at the time of detection of the beginning of the time interval, depending on the operating condition.

14. Use of the method according to any one of the preceding claims for time optimizing initialization processes of the stepper motor and/or a unit provided with said stepper motor, comprising moving the stepper motor shaft or an actuator operatively connected to said motor against a limit stop, and/or for using the detected time intervals for influencing the stepper motor control, in particular with regard to motor speed and/or torque.

## Revendications

1. Procédé de détection de l'indication d'un blocage éventuel dans des moteurs pas à pas unipolaires comportant au moins un enroulement de moteur, par analyse l'alimentation en courant du moteur et par prise en compte des courants de recirculation générés, le procédé comprenant les étapes suivantes :
- appliquer un courant de fonctionnement (Icoil), selon une variante d'alimentation en courant pour le fonctionnement du moteur pas à pas unipolaire lors d'une commande unipolaire, à au moins un enroulement de moteur au moyen d'un commutateur commandable par borne d'enroulement de moteur, le commutateur reliant la borne d'enroulement de moteur respectif éventuellement à une première borne de tension d'alimentation (1, VBAT) et les bornes, appliquées au potentiel commun, de chaque enroulement de moteur étant reliées en permanence à une deuxième borne de tension d'alimentation (2, GND),
- la variante d'alimentation en courant entre la commutation des enroulements de moteur comportant des phases dans lesquelles les bornes d'enroulement de moteur d'un enroulement de moteur reliées aux commutateurs sont commutées en haute impédance,
- détecter la tension (Vcoil) influencée par le courant de recirculation au niveau d'une borne d'enroulement de moteur commuté en haute impédance au moins pour la phase à haute impédance et la comparaison de cette tension à un seuil qui est égal à au moins 1,5 fois ou au moins 1,8 fois la tension d'alimentation ;
- détecter dans le temps la durée d'un intervalle de temps, influencé par le courant de recirculation, pour lequel la tension au niveau de la borne d'enroulement de moteur commutée en haute impédance est supérieure au seuil,
- comparer les durées des intervalles, influencés par le courant de recirculation respectif, pour une pluralité de bornes d'enroulement de moteur commutées en haute impédance et
- détecter un blocage éventuel sur la base des comparaisons des durées des intervalles par détection des fluctuations alternées des durées des intervalles de temps de plus d'une différence, pouvant être prédéfinie, comme indication d'un blocage éventuel.

2. Procédé selon la revendication 1, **caractérisé en ce que** la tension, détectée au moins pour la phase en haute impédance et influencée par le courant de recirculation, est comparée au niveau d'une borne d'enroulement de moteur commutée en haute impédance à un seuil qui est égal à au moins 2,0 fois et de préférence au moins 2,5 fois la tension d'alimentation ou au moins à un multiple entier ou non entier de celle-ci.

3. Procédé selon la revendication 1 ou 2, **caractérisé en ce que** les résultats de l'évaluation des durées des intervalles de temps sont filtrés pour supprimer l'influence de parasites.

4. Procédé selon l'une des revendications 1 à 3, **caractérisé en ce que** la position de rotation actuelle du moteur pas à pas ou de son induit est déterminée à l'instant de la détection de blocage et/ou **en ce que** l'alimentation en courant du moteur pas à pas est terminée lors d'une détection de blocage afin de réduire le bruit et/ou de minimiser une surcharge mécanique du moteur pas à pas, d'une transmission reliée fonctionnellement à celui-ci et/ou d'autres composants.

5. Procédé selon l'une des revendications 1 à 4, **caractérisé en ce que** le passage de l'alimentation en courant d'un enroulement de moteur à l'alimentation en courant de l'enroulement de moteur homologue n'est pas effectué de manière isochrone, mais avec un minutage pouvant être prédéterminé, en particulier lors d'une commutation de sinus/trapèze etc. MLI avec un minutage pouvant être prédéterminé qui est lié au passage par zéro, et **en ce que**, en particulier à un instant déterminé avant le passage par zéro du courant dans le cas d'un courant résiduel encore restant, l'alimentation en courant est interrompue en s'écartant de l'allure de courbe caractéristique de la variante d'alimentation en courant et la borne d'enroulement de moteur est commutée en haute impédance.

6. Procédé selon l'une des revendications 1 à 5, **caractérisé en ce que**, pour détecter les signaux de réponse, un détecteur de crête détecte la crête du signal de réponse et, pour déterminer la fin du signal de réponse, la comparaison est effectuée avec un seuil qui dépend de la tension de crête du détecteur de crête et qui est en particulier dans un rapport de division déterminé avec celle-ci.

7. Procédé selon l'une des revendications 1 à 6, **caractérisé en ce que**, lors de la détection des signaux de réponse, le signal de réponse est bloqué lorsque le seuil est atteint et par conséquent le courant de retour est détourné vers la tension d'alimentation vers laquelle les commutateurs commute à l'état fermé.

8. Procédé selon l'une des revendications 1 à 7, **caractérisé en ce que**, pour détecter les signaux de réponse, le seuil et, si nécessaire, également la propriété de blocage en fonctionnement, sont commutés dynamiquement de manière réversible en fonction de paramètres de fonctionnement.

9. Procédé selon la revendication 8, **caractérisé en ce que** les paramètres de fonctionnement sont la tension de fonctionnement, la température et la situation du moteur.

10. Procédé selon l'une des revendications 1 à 9, **caractérisé en ce que**, pour une mise en œuvre économique, la détermination de la durée des intervalles de temps est effectuée au moyen d'un compteur logarithmique et donc plus court, les opérations mathématiques ultérieures étant effectuées dans des calculs à base d'addition et de soustraction plutôt que dans des calculs à base de multiplication et de division.

11. Procédé selon l'une des revendications 1 à 10, **caractérisé en ce que** la détection du signal de réponse est effectuée avec un CAN, les tâches de seuillage et la détermination de la durée du signal de réponse, les différences et les fonctions de filtrage, étant effectuée en tout ou partie en logique ou à l'aide d'un contrôleur par logiciel.

12. Procédé selon l'une des revendications 1 à 11, **caractérisé en ce que**
- lors de la première apparition d'écarts, les valeurs de la position actuelle sont mémorisées temporairement, notamment par pas, angles ou similaires,
- l'accès à cette valeur mémorisée temporairement est effectué lors de la détection ultérieure d'un blocage ou d'une autre condition de charge pour compenser ou minimiser l'erreur de position provoquée par le retard de réponse du filtre,
- une valeur de correction fixe ou variable est en option ajoutée à la valeur de position actuelle mémorisées temporairement, ou soustraite de celle-ci, lors de la détection ultérieure d'un blocage ou d'une autre condition de charge pour minimiser des erreurs résiduelles restantes du procédé, et
- les valeurs mémorisées temporairement sont rejetées en cas de non-détection ultérieure d'un blocage.

13. Procédé selon l'une des revendications 1 à 12, **caractérisé en ce que** la mesure de la durée des intervalles de temps en fonction de la condition de fonctionnement débute soit au début du circuit à haute impédance soit à la détection du début de l'intervalle de temps.

14. Utilisation du procédé selon l'une des revendications précédentes pour optimiser dans le temps des processus d'initialisation du moteur pas à pas ou d'une unité comportant un moteur pas à pas par déplacement de l'arbre du moteur pas à pas ou d'un actionneur en liaison fonctionnelle avec celui-ci contre une butée et/ou pour utiliser les déterminations d'intervalle de temps afin d'influencer la commande du moteur pas à pas notamment en termes de vitesse de moteur et/ou de couple.
